# EUROPEAN PATENT SPECIFICATION

(11) **EP 1 992 031 B1**
(45) Date of publication and mention of the grant of the patent: **14.09.2011**
(21) Application number: 07712985.6
(22) Date of filing: 07.03.2007
(51) Int. Cl.: H01M 8/02, H01M 8/04, H01M 8/08, H01M 8/24

(54) **FUEL CELL ASSEMBLY**
BRENNSTOFFZELLEN-BAUGRUPPE
ENSEMBLE DE PILES À COMBUSTIBLE

(30) Priority: 07.03.2006 GB 0604598
(43) Date of publication of application: 19.11.2008
(73) Proprietor: AFC Energy PLC, London EC1V9EE (GB)
(72) Inventor: CARLISLE, Otto Franklin, Sussex RH12 4TS (GB); SAUER, Gerard Peter Theodore, London SW16 6JT (GB)
(74) Representative: Mansfield, Peter Turquand
(86) International application number: PCT/GB2007/050106
(87) International publication number: WO 2007/102028

(56) References cited:
- JP-A- 58 093 173
- JP-A- 59 184 469
- JP-A- 60 124 367
- JP-A- 63 178 455
- US-A- 3 926 676
- US-A- 5 993 987
- US-A- 6 040 072
- US-A1- 2003 207 156
- US-A1- 2005 042 497
- US-A1- 2005 208 362
- US-B1- 6 218 039

## Description

This invention relates to fuel cells.

Fuel cells are a type of electrochemical energy conversion device. In contrast to a battery, fuel cells do not store all of the chemicals that are to be converted; rather, at least one of the chemicals is supplied externally, usually from a fuel tank. Consequently, fuel cells do not run out of (internal) chemicals and so do not become "dead", as batteries do. Fuel cells are known in a number of different varieties. Fuel cells based on hydrogen and oxygen are particularly common today. Fuel cells may be classified according to their electrolyte, for example alkaline fuel cells (AFCs), phosphoric-acid fuel cells (PAFCs), solid oxide fuel cells (SOFCs) and molten carbonate fuel cells (MCFCs).

Alkaline fuel cells are of particular interest because they operate at relatively low temperatures and pressures, are efficient and rugged. Acid fuel cells and fuel cells employing other aqueous electrolytes are also of interest. Such fuel cells typically comprise an electrolyte chamber separated from a fuel gas chamber (containing a fuel gas, typically hydrogen) and a further fuel gas chamber (containing an oxidant gas, usually air). The electrolyte chamber is separated from the gas chambers using electrodes. The standard electrodes for alkaline fuel cells comprise a conductive metal grid or mesh backbone, typically nickel, that provides a mechanical strength to the electrode. Onto the metal mesh or grid is deposited a slurry or dispersion of particulate poly tetra-fluoroethylene (PTFE), activated carbon and a catalyst metal, typically platinum.

Whilst use of alkaline fuel cells in the present invention is preferred, the invention is not limited to alkaline fuel cells but rather is suitable for other kinds of fuel cells, particularly those that operate at relatively low temperatures (say less than 100°C).

Fuel cells typically comprise at least two electrodes fixed to plates or frames, which are typically plastic, and which are typically moulded together to form a stack. The stack has inlets and outlets for fuels and waste products, respectively. After a period of use the performance of the stack will deteriorate due to deterioration of the electrodes, which may become corroded. The stack is then thrown away and replaced with a new stack.

According to a first aspect of the invention there is provided a fuel-cell assembly according to claim 1.

Fuel-cell electrodes are relatively low-cost, compared with other parts of the fuel cell stack. When the electrodes are moulded into a stack, the whole stack must be disposed of as a single unit when electrodes have deteriorated to the point at which they need replacing. By providing electrodes that are held loosely within the stack, the invention allows replacement of the electrodes, whilst allowing reuse of the other parts of the stack. The invention may therefore provide electrodes that are "loose", in the sense that they can readily be removed from the stack and replaced. Since the stack may be disassembled, its constituent parts may be recycled or disposed of individually.

The electrodes may be of a shape complementary to the shape of the frame in which they are held, the shapes being such that the electrodes can be held only in one orientation. Allowing the electrodes to be installed in only one orientation eliminates the possibility of installing new electrodes in an incorrect orientation when old electrodes are replaced.

In a preferred embodiment the electrodes comprise: a substrate comprising a relatively hydrophilic plastics material, the substrate being permeable to aqueous fuel cell electrolytes; a conductive layer comprising a substantially uniform layer of conductive metal; and a catalyst layer. These layers may be discrete superimposed layers. Electrodes of that form are described in a PCT Patent Application by the same applicant PCT/GB2007/050104. Such an electrode is relatively cheap compared with the cost of other components within the stack and so replacement of the electrodes and reuse of the rest of the stack is particularly cost efficient. However, the invention is not limited to use of such an electrode.

The stack may further comprise a monitor for monitoring the electrodes to determine when they need to be replaced. For a given power output, the current output from the stack is typically substantially fixed. Thus, the voltage may be monitored and, when the voltage falls below a predetermined value, a decision may be made to replace the electrode.

The clamp may comprise a resilient member. Use of a resilient member allows the stack to expand or contract with temperature changes without the clamping of the components being compromised. The clamp may comprise a strap strapped around the stack. The end plates of the stack which are in contact with the strap may be larger than the frames of the stack. The strap may be seated in a groove. The strap may be made from a material that expands and contracts with changes in temperature by an amount sufficient to prevent the clamping of the walls and electrodes from being compromised. There may be a plurality of straps.

The clamp may further comprise a cam and lever system arranged to apply a force to the straps and hence to retain the cell stack components together.

The invention will now be further described, by way of example only, with reference to the accompanying drawings in which:
Figure 1 is a schematic cross-section of an electrode for use in a fuel cell stack;
Figure 2 is a schematic cross-section of a fuel cell stack incorporating an electrode of Figure 1;
Figure 3 shows a cross-sectional view of components forming a fuel cell stack, with the components separated for clarity;
Figure 4 shows a cross-sectional view of a cell stack as in figure 3, after insertion into a casing; and
Figure 5 shows a plan view of an anode from the stack of figure 3.

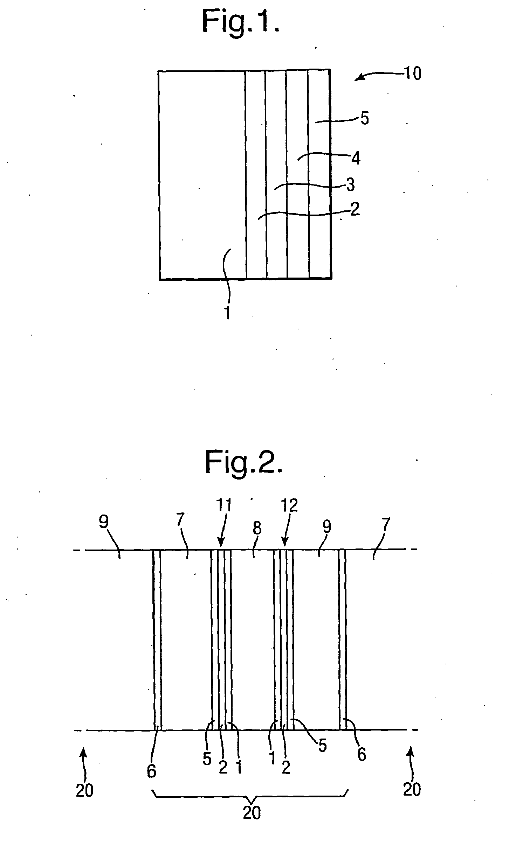

Referring now to Figure 1, an electrode 10 is built up of three main parts: a porous substrate 1, a conductive layer comprising layers 2 and 3 of conductive materials and an optional layer 4 of protective material, and a catalyst layer 5.

### Substrate

In each of the examples the substrate 1 is a microporous sheet of polypropylene plastics material (SciMAT 700/70), which is hydrophilic and has an approximate thickness of between 100 to 400 µm, such as 125 µm, and a bubble point of between 8.0 to 15.0 kPa gauge. This material has a wicking rate of 90 mm per 600 seconds.

### The Conductor

### Example 1.

A 0.5 µm layer of silver is electro-less plated onto the substrate 1 to form a first layer 2 of conductive material. A second layer 3 of silver of thickness 3 µm is then electroplated onto the first layer 2 of conductive material. A protective 0.05 µm thick layer 4 of rhodium is then electroplated onto the second layer 3 of conductive material to complete the conductive layer structure.

### Example 2.

A 0.5 µm layer of silver is electro-less plated onto the substrate 1 to form a first layer 2 of conductive material, followed by electroplating copper to form a second layer 3 of thickness 5 µm of conductive material, followed by electroplating a protective layer 4 of nickel, 1 µm thick.

### Example 3.

A 0.5 µm layer 2 of silver is electro-less plated onto the substrate 1 to form a first layer of conductive material, followed by electroplating 5 µm thickness of nickel to form a second layer 3 of conductive material.

### The Catalyst Mixture

The example catalyst mixtures for both cathode and anode electrodes use a combination of catalyst, binder and solvent which are spray-coated onto the conductor layers of Examples 1, 2 and 3 above. The binder may for example be polyethylene (such as PE1020 from Exxon-Mobil), and the solvent isododecane. Percentage weights refer to the total mass of the dry materials before the addition of a suitable solvent.

The cathode catalyst mixtures A to C below include an oxygen reduction catalyst.
A. Activated carbon, with 10% binder and solvent.
B. 10% Pd/Pt on activated carbons with 10% binder + solvent.
C. Silver on activated carbon, with 10% binder + solvent.
   The anode catalyst mixtures D and E below include a hydrogen oxidation catalyst.
D. Nickel-aluminum alloy powder with activated carbon, with 10% binder and solvent.
E. 10% Pd/Pt on activated carbon, with 10% binder + solvent.

Referring now to figure 2, a fuel cell 20 comprises two electrodes 11 and 12, each with two mutually opposed surfaces, one of which has the catalyst layer 5 and the other is the substrate layer 1, as described in relation to figure 1 above. The anode 11 and cathode 12 (which may differ in the nature of the respective catalyst layer 5, as described above) are mutually spaced so as to form an electrolyte chamber 8 between them. A hydrogen gas chamber 7 for hydrogen gas is provided on the opposite side of the anode 11 from the electrolyte chamber 8, and an oxygen gas chamber 9 for air is provided on the opposite of the cathode 12. The catalyst side of each of the anode and cathode 11, 12 (i.e. the side with the catalyst layer 5) is exposed to the gas chambers, so the substrate side (i.e. the side that is not provided with a catalyst layer) is exposed to the electrolyte chamber 8.

On the other side of the gas chambers 7, 9 from the electrodes is provided a bipolar plate 6 that separates a gas chamber 7, 9 of one type from a further gas chamber 9, 7 of the other type in an adjacent fuel cell 20.

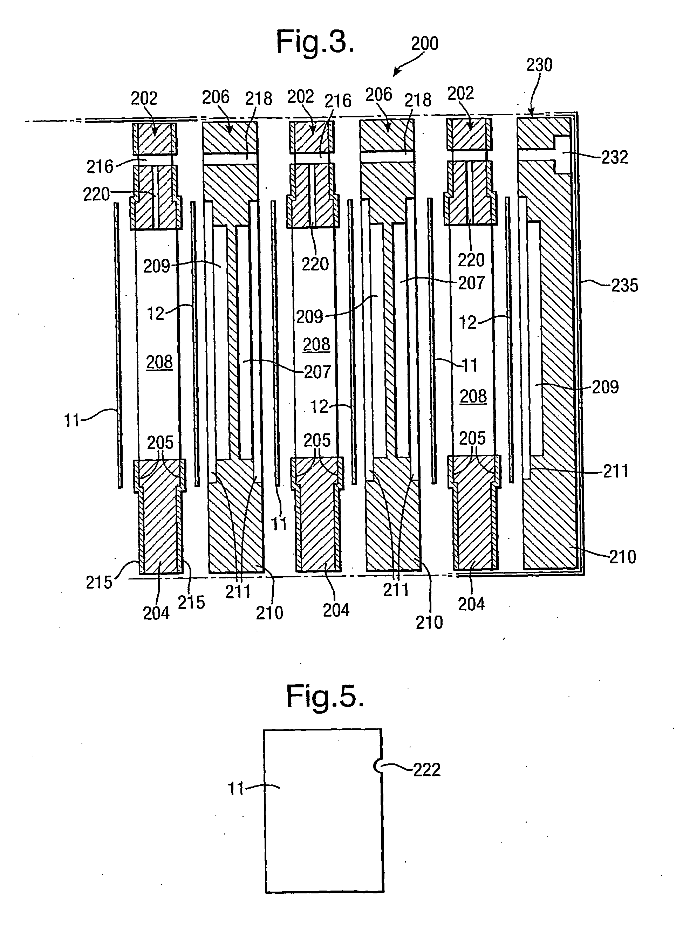

Referring now to figure 3 there is shown a cross-sectional view through the structural components of a cell stack 200 corresponding to the arrangement of figure 2, but with the components separated for clarity. The stack 200 consists of a stack of moulded plastic plates 202 and 206 arranged alternately. The plates 202 define a generally rectangular through-aperture 208 surrounded by a frame 204; the apertures 208 provide the electrolyte chambers 8; immediately surrounding the aperture 208 is a 5 mm wide portion 205 of the frame which projects 0.5 mm above the surface of the remaining part of the frame 204. The plates 206 are bipolar plates; they define rectangular blind recesses 207 and 209 on opposite faces, each recess being about 3 mm deep, surrounded by a frame 210 generally similar to the frame 204, but in which there is a 5 mm wide shallow recess 211 of depth 1.0 mm surrounding each recess. The blind recesses 207 and 209 provide the gas chambers 7 and 9. The apertures 208 may be filled with a loose mesh (not shown) to provide mechanical support for the electrodes 11 and 12.

Electrodes 11 and 12 locate in the shallow recesses 211 on opposite sides of each bipolar plate 206, with the catalyst-carrying face of the electrode 11 or 12 facing the respective blind recess 207 or 209 respectively. Before assembly of the stack components, the opposed surfaces of each frame 204 (including that of the raised portion 205) is covered with gasket sealant 215; this adheres to the frame 204 and dries to give a non-tacky outer surface, while remaining resilient. The components are then assembled as described, so that the raised portions 205 locate in the shallow recesses 211, securing the electrodes 11 and 12 in place. The sealant 215 ensures that electrolyte in the chambers 208 cannot leak out, and that gases cannot leak in, around the edges of the electrodes 11 and 12, and also ensures that gases cannot leak out between adjacent frames 204 and 210.

The surfaces of the frames 210 of the bipolar plates 206, including the outer edge surface, are provided with a nickel coating, for example by electro-less deposition. This coating of nickel provides an electrical connection between an anode 11 on one side and a cathode 12 on the other side, so that the fuel cells 10 are connected in series with each other in the cell stack. This coating may alternatively be of other conducting materials.

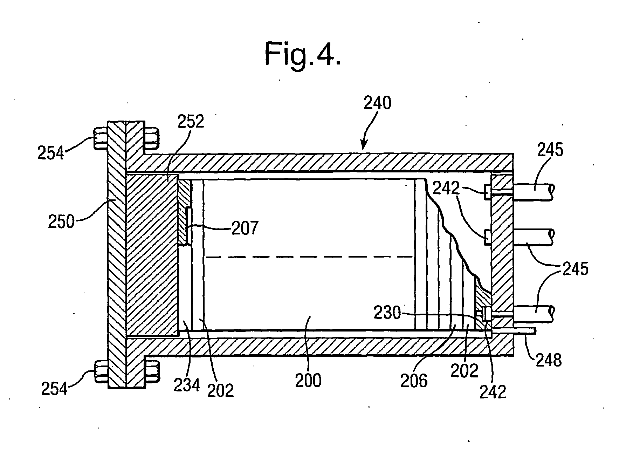

The flow of electrolyte to and from the electrolyte chambers (apertures 208), and the flows of the gases to and from the gas chambers (recesses 207 and 209), follow respective fluid flow ducts defined by aligned apertures through the plates 202 and 206; only one such set of apertures 216 and 218 are shown. This set of apertures 216 and 218 provides electrolyte to the electrolyte chambers 208 via narrower transverse ducts 220. The sealant 215 is placed so as not to block the apertures 216. At one end of the stack 200 is an end plate 230 which defines a blind recess 209 on one face but is blank on the outer face, and defines ports 232 communicating with the fluid flow ducts through which the gases and electrolyte flow to or from the stack 200, each port 232 comprising a cylindrical recess on the outer face of the end plate 230. At the other end is an end plate 234 (see Figure 4) which defines a blind recess 207, but is blank on the outer face and does not define through apertures.

After assembly of the stack 200 the components are secured together for example using a strap 235 (shown partly broken away) around the entire stack 200.

Referring now to figure 4, after assembly the stack 200 is then inserted into a casing 240, the closed end of the casing 240 defining projecting nozzles 242 which locale in and seal to the cylindrical ports 232 on the outer face of the end plate 230. The nozzles 242 may incorporate O-ring seals (not shown). Pipes 245 to carry the gases and electrolyte to or from the cell stack 200 communicate with these projecting nozzles 242 via ducts through the end of the casing 240. In addiction, electrical connections 248 which project from the end plate 230 extend through corresponding apertures in the end of the casing 240. The open end of the casing 240 is then closed by a cap 250 which incorporates a pressure applying plate 252 to ensure that the stack 200 remains under compression despite expansion or contraction with temperature changes. In this example the cap 250 is attached to the casing 240 by bolts 254. In one embodiment the casing 240 is of a moulded plastics material, and the external pipes 245 are integral with it.

If it is subsequently necessary to replace one of the electrodes 11 or 12, this can be achieved after removing the cap 250, withdrawing the stack 200, and undoing the strap 235 (not shown in Figure 4), by separating the plates 202 and 206, and replacing the electrode 11 or 12. The gasket material 215 can be peeled off the surface of the plate 202, and fresh gasket material 215 deposited. The electrodes 11 and 12 and the recesses 211 into which they locate may be shaped to ensure that the electrodes 11 or 12 cannot be inserted in the wrong orientation, for example as shown in Figure 5 the electrodes 11 may be rectangular with a cut-out 222 at one point around the periphery, there being a projection of complementary shape in the corresponding wall of the recess 211.

The electrodes 11 and 12 are not mechanically bonded to the plates 202 and 206, which has a number of implications. First, electrodes 11 and 12 are readily separated from the rest of stack 200. When the electrodes 11, 12 complete their service life, the stack 200 is removed as described above from the system in which it is installed and it may be replaced by a previously overhauled stack 200; the system thus has little down-time. The used stack 200 is dismantled to replace the old electrodes 11, 12 so that it is ready for re-use. Consequently, replacement of the stack costs only the cost of the new electrodes (and labour costs for their installation). It may subsequently be possible to refurbish the old electrodes 11, 12 offsite.

Second, the lack of mechanical bonding means that accurate assembly of stack 200 is particularly important, as there are more parts to be correctly located. In order to aid accurate assembly, parts are arranged to be joined together or assembled in one orientation only. This is ensured for example by the cut-out 222 and complementary projection described above (Fig. 5).

Third, as the electrodes 11, 12 are not mechanically bonded to the plates 202 and 206, the stack 200 must be held together by some other means; but this should be readily releasable, so that the stack 200 may be dismantled easily. This is ensured by for example the strap 235 (Fig. 3).

During operation the clamping force holding the stack together must be sufficient to prevent any fluid leakage, despite variations in the length of the stack as its temperature varies. The pressure applying plate 252 may therefore incorporate a spring system. The spring system can either be in the form of a mechanical spring (for example, a helical, or leaf spring) or in the form of a suitable resilient plastic material.

## Claims

1. A fuel cell assembly comprising: (a) a fuel cell stack comprising a plurality of fuel cells, each fuel cell comprising two electrodes that are mutually spaced so as to form an electrolyte chamber therebetween, a first gas chamber for a first gas being provided on the opposite side of a first electrode from the electrolyte chamber, and a second gas chamber for a second gas being provided on the opposite of a second electrode from the electrolyte chamber, and each electrode incorporating a catalyst; the fuel cell stack incorporating electrolyte chamber frames to define the electrolyte chambers and gas chamber frames to define the gas chambers, the electrodes being sealingly secured between the electrolyte chamber frames and the gas chamber frames; and at least one end plate defining ports to supply or withdraw fluids from the fuel cells;
(b) a releasable clamp to retain the components of the fuel cell stack; and
(c) a casing into which the fuel cell stack is insertable, the casing providing compression means to compress the fuel cell stack components together;
(d) in which the fuel cell stack and the closed end of the casing define mating plugs and sockets for supply of electrolyte and gases to or from the fuel cell stack.

2. A fuel cell assembly as claimed in claim 1, in which the electrodes are of a shape complementary to the shape of the frame in which they locate, and the shapes are such that the electrodes can be held only in one orientation.

3. A fuel cell assembly as claimed in any preceding claim, in which the electrode comprises: a substrate comprising a relatively hydrophilic plastics material, the substrate being permeable to aqueous fuel cell electrolytes; a conductive layer comprising a substantially uniform layer of conductive metal; and a catalyst layer.

4. A fuel cell assembly as claimed in any one of the preceding claims wherein the electrodes are readily removable from the fuel cell stack.

5. A fuel cell assembly as claimed in any one of the preceding claims, further comprising a monitor for monitoring the electrodes to determine when they need to be replaced.

6. A fuel cell assembly as claimed in any one of the preceding claims wherein the casing is of a moulded plastics material.

7. A fuel cell assembly as claimed in any one of the preceding claims wherein fluid flow pipes for supply of electrolyte or gas to or from the stack are integral with the casing.

8. A fuel cell assembly as claimed in any one of the preceding claims wherein the casing incorporates a resilient element which allows the stack to expand or contract with temperature changes without the clamping of the plates and electrodes being compromised.

9. A fuel cell assembly as claimed in any one of the preceding claims, in which the clamp comprises a strap strapped around the stack.

## Patentansprüche

1. Brennstoffzellenanordnung, die Folgendes umfasst:
(a) einen Brennstoffzellenstapel, der mehrere Brennstoffzellen umfasst, wobei jede Brennstoffzelle zwei Elektroden umfasst, die so voneinander beabstandet sind, dass dazwischen eine Elektrolytkammer gebildet wird, wobei eine erste Gaskammer für ein erstes Gas auf der gegenüberliegenden Seite einer ersten Elektrode von der Elektrolytkammer bereitgestellt ist und eine zweite Gaskammer für ein zweites Gas auf der gegenüberliegenden Seite einer zweiten Elektrode von der Elektrolytkammer bereitgestellt ist und jede Elektrode einen Katalysator enthält; wobei der Brennstoffzellenstapel Elektrolytkammerrahmen, um die Elektrolytkammern abzugrenzen, und Gaskammerrahmen, um die Gaskammern abzugrenzen, enthält, die Elektroden abdichtend zwischen den Elektrolytkammerrahmen und den Gaskammerrahmen angebracht sind und mindestens eine Endplatte Anschlüsse zum Zuführen oder Abziehen von Fluiden zu bzw. aus den Brennstoffzellen abgrenzt;
(b) eine lösbare Klemme, um die Komponenten des Brennstoffzellenstapels festzuhalten; und
(c) ein Gehäuse, in das der Brennstoffzellenstapel eingesetzt werden kann, wobei das Gehäuse Zusammendrückmittel bereitstellt, um die Brennstoffzellenstapelkomponenten zusammenzudrücken;
(d) wobei der Brennstoffzellenstapel und das geschlossene Ende des Gehäuses zusammenpassende Stecker und Buchsen zur Zuführung von Elektrolyt und Gasen zu oder von dem Brennstoffzellenstapel abgrenzen.

2. Brennstoffzellenanordnung nach Anspruch 1, wobei die Elektroden eine Form aufweisen, die zu der Form des Rahmens, in dem sie sich befinden, abgestimmt ist und die Formen derart sind, dass die Elektroden nur in einer Ausrichtung gehalten werden können.

3. Brennstoffzellenanordnung nach einem der vorhergehenden Ansprüche, wobei die Elektrode Folgendes umfasst: ein Substrat, das ein verhältnismäßig hydrophiles Kunststoffmaterial umfasst, wobei das Substrat für wässrige Brennstoffzellenelektrolyten durchlässig ist; eine leitfähige Schicht, die eine im Wesentlichen gleichmäßige Schicht aus leitfähigem Metall umfasst; und eine Katalysatorschicht.

4. Brennstoffzellenanordnung nach einem der vorhergehenden Ansprüche, wobei die Elektroden einfach aus dem Brennstoffzellenstapel herausgenommen werden können.

5. Brennstoffzellenanordnung nach einem der vorhergehenden Ansprüche, die weiterhin eine Überwachungsvorrichtung zum Überwachen der Elektroden umfasst, um zu bestimmen, wann diese ausgetauscht werden müssen.

6. Brennstoffzellenanordnung nach einem der vorhergehenden Ansprüche, wobei das Gehäuse aus einem geformten Kunststoffmaterial ist.

7. Brennstoffzellenanordnung nach einem der vorhergehenden Ansprüche, wobei Fluidströmungsrohre zur Zuführung von Elektrolyt oder Gas zu oder von dem Stapel mit dem Gehäuse integral sind.

8. Brennstoffzellenanordnung nach einem der vorhergehenden Ansprüche, wobei das Gehäuse ein nachgiebiges Element enthält, das dem Stapel ermöglicht, sich mit Temperaturveränderungen auszudehnen oder zusammenzuziehen, ohne dass die Klemmung der Platten und Elektroden **dadurch** beeinträchtigt wird.

9. Brennstoffzellenanordnung nach einem der vorhergehenden Ansprüche, wobei die Klemmung einen Bügel umfasst, der um den Stapel herum geschnallt ist.

## Revendications

1. Ensemble pile à combustible comprenant :
(a) un assemblage de piles à combustible comprenant une pluralité de piles à combustible, chaque pile à combustible comprenant deux électrodes mutuellement espacées de façon à former une chambre à électrolyte entre celles-ci, une première chambre à gaz pour un premier gaz, disposée sur le côté opposé d'une première électrode à partir de la chambre à électrolyte, et une seconde chambre à gaz pour un second gaz, disposée sur à l'opposé d'une seconde électrode à partir de la chambre à électrolyte, et chaque électrode comportant un catalyseur ; l'assemblage de piles à combustible comportant des cadres de chambre à électrolyte pour définir les chambres à électrolyte et des cadres de chambre à gaz pour définir les chambres à gaz, les électrodes étant fixées de manière étanche entre les cadres de chambre à électrolyte et les cadres de chambre à gaz ; et au moins une plaque d'extrémité définissant des orifices pour alimenter ou retirer des fluides des piles à combustible ;
(b) une bride libérable pour retenir les composants de l'assemblage de piles à combustible ; et
(c) un boîtier dans lequel l'assemblage de piles à combustible peut être inséré, le boîtier fournissant des moyens de compression pour comprimer ensemble les composants de l'assemblage de piles à combustible ;
(d) dans lequel l'assemblage de piles à combustible et l'extrémité fermée du boîtier définissent des fiches et des prises s'accouplant pour la fourniture d'un électrolyte et de gaz vers ou à partir de l'assemblage de piles à combustible.

2. Ensemble pile à combustible selon la revendication 1, dans lequel les électrodes ont une forme complémentaire à la forme du cadre dans lequel elles sont situées, et les formes sont telles que les électrodes peuvent être maintenues seulement dans une orientation.

3. Ensemble pile à combustible selon l'une quelconque des revendications précédentes, dans lequel l'électrode comprend : un substrat comprenant une matière plastique relativement hydrophile, le substrat étant perméable aux électrolytes aqueux de pile à combustible ; une couche conductrice comprenant une couche sensiblement uniforme de métal conducteur ; et une couche de catalyseur.

4. Ensemble pile à combustible selon l'une quelconque des revendications précédentes, dans lequel les électrodes peuvent être facilement enlevées de l'assemblage de piles à combustible.

5. Ensemble pile à combustible selon l'une quelconque des revendications précédentes, comprenant en outre un dispositif de surveillance pour surveiller les électrodes pour déterminer lorsque celles-ci ont besoin d'être remplacées.

6. Ensemble pile à combustible selon l'une quelconque des revendications précédentes, dans lequel le boîtier est constitué d'une matière plastique moulée.

7. Ensemble pile à combustible selon l'une quelconque des revendications précédentes, dans lequel des conduits d'écoulement de fluide pour la fourniture d'électrolyte ou de gaz vers ou à partir de l'assemblage, sont d'un seul tenant avec le boîtier.

8. Ensemble pile à combustible selon l'une quelconque des revendications précédentes, dans lequel le boîtier comporte un élément souple qui permet à l'assemblage de se déployer ou de se contracter avec les changements de température sans compromettre le serrage des plaques et des électrodes.

9. Ensemble pile à combustible selon l'une quelconque des revendications précédentes, dans lequel la bride comprend une sangle attachée autour de l'assemblage.
